# EUROPEAN PATENT SPECIFICATION

(11) **EP 0 513 034 B1**
(45) Date of publication and mention of the grant of the patent: **27.04.1994**
(21) Application number: 91902205.3
(22) Date of filing: 17.01.1991
(51) Int. Cl.: B23K 1/008

(54) **GAS CURTAIN ADDITIVES AND ZONED TUNNEL FOR SOLDERING**
GASVORHANGZUTATEN UND LÖTTUNNEL, DER AUS ZONEN BESTEHT
ADDITIFS POUR RIDEAU DE GAZ ET TUNNEL A ZONES POUR SOUDAGE

(30) Priority: 31.01.1990 US 472899
(43) Date of publication of application: 19.11.1992
(73) Proprietor: ELECTROVERT LIMITED, La Prairie, Quebec J5R 2E4 (CA)
(72) Inventor: MITTAG, Michael, T., New Haven, VT 0547 (US)
(74) Representative: Warren, Keith Stanley
(86) International application number: CA9100011
(87) International publication number: WO9111284

(56) References cited:
- EP-A- 0 307 319
- US-A- 4 538 757
- US-A- 4 696 226
- ELECTRONIC PACKAGING AND PRODUCTION vol. 30,no. 4, April 1990, NEWTON, MASSACHUSETT pages 64-66 ; Peter Fodor et al.: "Cover Gas Soldering Leaves Nothing to Clean Off PCB Assembly"

## Description

The present invention relates to soldering, and more specifically to soldering within an enclosed zone.

In the past, soldering has generally required flux to promote wetting and good solder joints. Flux removes surface oxides on the metallic surfaces to be soldered. When elements, such as printed wiring boards and the like are soldered, they are generally fluxed prior to soldering. More recently, inert gas soldering, generally nitrogen gas, which in some cases may also be mixed with other types of gas, has been used to replace fluxes. By eliminating flux and still preventing oxidation of the solder, one avoids the necessity of cleaning the solder joints after soldering. Reducing agents and other soldering additions, in gaseous form, liquid droplets or mist, or in some cases in powder form, are sometimes applied even in fluxless soldering.

In one embodiment, soldering is achieved by passing an element through a solder wave. In another embodiment reflow soldering is used wherein solder paste is first applied to the metallic components to be soldered, and the element is then heated so that the solder melts to liquid solder which wets and forms the solder joint. Most solder paste used for reflow soldering includes flux. However if reflow soldering occurs in an inert atmosphere, then a reduction of the quantity of flux in the solder paste can be achieved.

It is known to solder an element in a non-explosive gas atmosphere which substantially excludes oxygen. A tunnel enclosure is generally provided with entry gas curtains and exit gas curtains at the entry and exit to the tunnel. These gas curtains may be of the type shown in U.S. patent 4,696,226 to Witmer and provide two sets of curtains at both the entry and exit with a space between, which is sufficient to permit the element to be soldered to pass completely through the first curtain without interrupting the flow of fluid at the second curtain. When the element passes through the second curtain, then the flow of fluid to the first curtain is not interrupted. In this way, one of the gas curtains is always closed ensuring that no gas within the enclosure escapes out of the tunnel enclosure and no air from outside enters the enclosure.

Bertiger in U.S. Patent 4,538,757 shows an enclosure for wave soldering in an atmosphere which is substantially free of oxygen. Inert gas curtains are provided at an entry and an exit to the enclosure and a gaseous reducing agent is added to the enclosure. However, Bertiger requires that the whole enclosure be filled with the gaseous reducing agent in order for the soldering to occur in this atmosphere.

EP-A-0 307 319 shows a tunnel type reflow furnace. An article entitled "Cover Gas Soldering Leaves Nothing to Clean Off PCB Assembly" shows additives being applied to a PCB assembly.

It is an aim of the present invention to provide at least one enclosed zone for soldering which has at least one fluid barrier curtain at the entry and permits the addition of an additive such as a soldering aid, to be introduced into the enclosed zone by means of the fluid barrier curtain. It is a further aim to provide multiple enclosed zones with fluid barrier curtains between zones wherein the zones can be at different temperatures, contain different gases or percentages of gas combinations, or have different ambient conditions.

The present invention provides a process for soldering an element comprising the steps of conveying the element into an enclosed zone through an entry containing at least one fluid barrier curtain, heating and soldering the element in the zone, and conveying the element from the enclosed zone through an exit, characterized in that an additive selected from the group consisting of flux, reducing agents, formic acid and adipic acid, is added directly into fluid in at least one fluid barrier curtain at the entry.

The present invention also provides an apparatus for soldering an element comprising an enclosed zone for containing a gas atmosphere, the enclosed zone having an entry and an exit, at least one fluid barrier curtain at the entry, conveyor means for conveying an element through the fluid barrier curtain at the entry, the enclosed zone and the exit, and means for heating and soldering the element within the enclosed zone, characterized by means for adding an additive directly into fluid in at least one fluid barrier curtain at the entry.

In drawings which illustrate embodiments of the invention,

Figure 1 is a side elevational view showing an enclosed zone with fluid barrier curtains at entry and exit.

Figure 2 is a side elevational view showing two enclosed zones with a fluid barrier curtain between the zones.

Figure 3 is a side elevational view showing an apex shaped zone with a solder wave arrangement therein and fluid barrier curtains at the entry and exit.

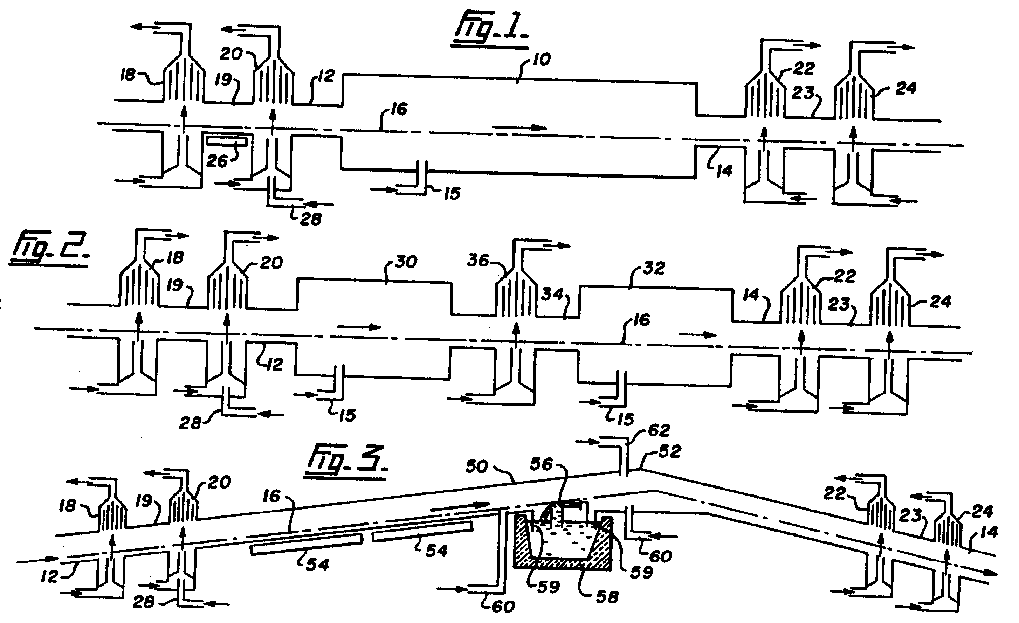

Referring now to Figure 1, there is provided a linear enclosed zone 10 with an entry tunnel 12 and an exit tunnel 14. A gas entry 15 provides gas within the zone 10. A conveyor 16, shown in dotted line, conveys elements into the entry tunnel 12 through the zone 10 and out through the exit tunnel 14. A first fluid barrier curtain 18 and a second fluid barrier curtain 20 are shown in line in the entry tunnel 12 with a tunnel portion 19 in between, and a first fluid barrier curtain 22 and a second fluid barrier curtain 24 are shown in line in the exit tunnel 14 with a tunnel portion 23 in between. The fluid barrier curtains are of the same type as that shown in U.S. patent 4,696,226. The fluid barrier curtains remove excess gas from within the enclosed zone.

The conveyor may be a single conveyor passing from the entry tunnel 12 to the exit tunnel 14 or alternatively may be one or more of a number of conveyors such as a mesh belt conveyor, finger conveyor to support elements to be soldered, such as circuit boards and the like, or a pallet type conveyor to support circuit boards and other types of elements to be soldered on pallets.

The first and second fluid barrier curtains 18 and 20 are spaced apart at sufficient distance so that when an element interrupts the flow of air in one curtain barrier, it does not extend across the second curtain barrier, thus there is always one curtain barrier in full operation. In this way, the atmosphere within the enclosed zone 10 remains within that zone and does not escape to the atmosphere. Similarly, atmospheric air cannot enter the enclosed zone 10.

In one embodiment, a heater 26 is provided adjacent the tunnel portion 19 to preheat the elements passing in the tunnel portion 19 between the fluid barrier curtains 18 and 20.

An additive, in one embodiment a soldering additive is added at either the first entry fluid barrier curtain 18 or the second entry fluid barrier curtain 20 to the gas flow in the curtain. If the additive is a dangerous substance, such as formic acid, it is added at the second curtain 20. The additives may be introduced to the curtain in different manners, as for instance a mixture of curtain gases or alternatively liquids entrained within the curtain gas. An injector nozzle 28 is shown in the fluid barrier curtain 20 to inject an additive directly into the fluid of the barrier 20. The nozzle 28 may be a spray nozzle, a spray bar or the like. The fluids may comprise heated nitrogen, various reducing agents, adipic acid, gases or mist mixed with fluid at the curtains or premixed. Gas may be provided from bottled sources or a gas reservoir. The solder additives may be a flux when some oxygen is present in the enclosure. If no oxygen is present, flux may not be needed.

The additives can be obtained from a sealed vessel and entrained, sprayed, atomized or the like directly into the gas supply forming the gas curtain. The additive source may be located remotely from the gas supply or the gas curtain, and may be piped from a central location for a number of units and premixed with gas or gases so that the additive has insured proportional control of the mixture in the curtain. In another embodiment the curtain gas is preheated to a selected temperature. This may be used for preheating the element prior to entering the enclosed zone 10. By preheating the element, one avoids thermal shock which can occur in some instances during the soldering step. Furthermore, the additive may be thermally activated within the enclosed zone.

In one embodiment a formic acid additive is present in the enclosure 10 and assists in eliminating and preventing oxides that may be present on solder exposed to the enclosure 10. In another embodiment adipic acid additive or other acidic compounds, in powder or liquid form, are added by means of the fluid in the curtain. In some circumstances, the adipic acid additive enhances capillary rise of solder in holes requiring soldering in elements.

The soldering may be wave soldering, as will be described here afterwards, or alternatively, reflow soldering, wherein solder paste is applied to metallic pads or components on the element to be soldered. Preplated or presoldered bumps may be provided on pads or components of an element which melt and reflow when the element is heated. Heaters (not shown) are provided adjacent to or within the enclosure 10 and the elements are heated. As they are heated the solder paste melts. The solder then flows to form a solder joint and subsequently cools so that the solder solidifies before leaving the exit tunnel 14. No flux is required in the solder paste if the atmosphere in the enclosure 10 excludes oxygen and/or includes a gaseous reducing agent which provides fluxing action. Preplated or presoldered bumps do not require flux for reflow soldering in such an atmosphere.

Figure 2 illustrates another embodiment wherein a first enclosed zone 30 and a second enclosed zone 32 are provided in line. Between the first zone 30 and the second zone 32 is an aperture comprising an intermediate tunnel 34 with an intermediate fluid barrier curtain 36. The conveyor 16 conveys elements from the entry 12 to the exit 14 through both zones 30 and 32.

In this embodiment the first zone may preheat the elements and may be at a different temperature than the second zone 32. Soldering may occur in the second zone 32 which is at a different temperature. By heating the element in different zones, thermal shock is reduced. Thermal profiling of the element from zone to zone may be provided for elements requiring this type of heating. The intermediate fluid barrier curtain 36 separates the two zones 30 and 32. In another embodiment different gases may be provided within the two zones 30 and 32 and the intermediate curtain 36 isolates the two zones from each other. A plurality of zones maybe provided with gas curtains there between to provide a series of controlled atmospheres with different environments and/or temperatures. This arrangement provides selected heat profiles for a soldering process. Furthermore, the gas curtains prevent the escape of gas from one zone into another. Undesired aromatic gases may be contained by utilizing this system, and furthermore, the curtains may be used to add various soldering additives, such as reducing agents, to the elements passing through the curtains. In some curtains, as shown in the drawings, the fluid in the curtain moves upwards from an aperture in the base to a receiver at the top. In situations where it is required to apply an additive to the top of an element, the fluid flow in the curtain is measured. By preheating the gas in the different curtains with selected temperature, a thermal profile can be provided for the element. Exterior heaters may be provided for different zones. The curtains may be of varying widths for the preheating of the elements.

The enclosed zone 10 shown in Figure 1 and zones 30 and 32 shown in Figure 2 represent linear tunnels, however, Figure 3 indicates an apex shaped tunnel 50 with a peak 52 or apex above the level of the entry 12 and exit 14. A conveyor 16 is shown for conveying elements through the curtains 18 and 20 over preheaters 54 to preheat the elements and then through a solder wave 56 positioned above a solder pot 58. The enclosure 50 has skirts 59 which extend down into the solder in the solder pot 58. Thus, a seal is provided between the solder pot and the enclosure 50. For maintenance purposes the solder pot 58 may be lowered and then raised to the position shown in Figure 3. Gas entry lines 60 are shown on each side of the solder pot 58 into the enclosure 50 and a further gas line 62 is shown above the solder pot 58.

In another embodiment, additional curtains may be provided at either one side or both sides of the solder pot adjacent the solder pot, thus isolating the heating zone from the solder zone and the solder zone from the cooling zone.

## Claims

1. A process for soldering an element comprising the steps of:
conveying the element into an enclosed zone (10) through an entry (12) containing at least one fluid barrier curtain (18,20);
heating and soldering the element in the zone (10), and
conveying the soldered element from the enclosed zone (10) through an exit (14);
characterized in that an additive selected from the group consisting of flux, reducing agents, formic acid and adipic acid, is added directly into fluid in at least one fluid barrier curtain (18,20) at the entry (12).

2. The process for soldering according to claim 1 including the steps of conveying the element into a first enclosed zone (30) through the entry (12) containing at least one fluid barrier curtain (18,20);
heating the element in the first enclosed zone (30);
conveying the element from the first zone (30) through an aperture (34) containing at least one fluid barrier curtain (36) into a second enclosed zone (32);
soldering the element in the second enclosed zone (32), and
conveying the soldered element from the second zone (32) through the exit (14) containing at least one fluid barrier curtain (22,24).

3. The process for soldering according to claim 2 wherein an additive is added directly into fluid in at least one fluid barrier curtain (36) in the aperture (34).

4. The process for soldering according to Claim 2 or 3 wherein the first zone (30) and the second zone (32) are at different temperatures.

5. The process for soldering according to Claim 2, 3 or 4 wherein the first zone (30) and the second zone (32) have different gas atmospheres therein.

6. The process for soldering according to Claim 2, 3, 4 or 5 including additional enclosed zones with apertures containing fluid barrier curtains therein, and wherein the element is conveyed through all the zones and fluid barrier curtains.

7. The process for soldering according to any preceding claim wherein two fluid barrier curtains are provided in line in the entry (12) and in the exit (14), and wherein the additive is added directly into fluid at the second (20) of the two curtains in the entry.

8. The process for soldering according to Claim 7 wherein the additive is selected from the group consisting of gas mixed with fluid in the second (20) of the two curtains, and mist mixed with fluid in the second (20) of the two curtains.

9. The process for soldering according to any preceding Claim 1 to 6 wherein two fluid barrier curtains are provided in line in the entry and in the exit, and wherein the additive is added directly into fluid at the first (18) of the two curtains in the entry.

10. The process for soldering according to Claim 9 wherein the additive is selected from the group comprising flux, reducing agent, gas mixed with fluid in the first (18) of the two curtains and mist mixed with fluid in the first (18) of the two curtains.

11. The process for soldering according to any preceding Claim wherein fluid in at least one fluid barrier curtain (18,20) at the entry (12) is a preheated gas.

12. The process for soldering according to any preceding Claim wherein the element is conveyed in a predetermined path (16) in the enclosed zone (50), a solder wave (56) is formed above a solder pot (58) beneath the path (16) so that at least a portion of the element conveyed in the path (16) passes through the solder wave (56).

13. The process for soldering according to any preceding Claim 1 to 11 wherein the soldering is reflow soldering within the enclosed zone (10).

14. An apparatus for soldering an element comprising:
an enclosed zone (10,50) for containing a gas atmosphere, the enclosed zone (10,50) having an entry (12) and an exit (14);
at least one fluid barrier curtain (18,20) at the entry (12);
conveyor means (16) for conveying an element through the fluid barrier curtain (18,20) at the entry (12), the enclosed zone (10,50) and the exit (14), and
means for heating and soldering the element within the enclosed zone (10,50);
characterized by means (28) for adding an additive directly into fluid in at least one fluid barrier curtain (18,20) at the entry (12).

15. The apparatus for soldering an element according to Claim 14 wherein two fluid barrier curtains (18,20) in line are provided at the entry (12), and wherein the means (28) for adding an additive is applied directly into the second curtain (20).

16. The apparatus for soldering an element according to Claim 14 or 15 wherein two fluid barrier curtains (18,20) in line are provided at the entry (12), and wherein the means (28) for adding an additive is applied directly into the first curtain (18).

17. The apparatus for soldering an element according to Claim 14 15 or 16 including at least one heater means (54) in the zone (50) to heat the element conveyed on the conveyor means (16), means (56) for forming at least one solder wave in the zone (50) after the heater means (16), the conveyor means conveying the element in a predetermined path (16) through the enclosed zone (50), ensuring at least a portion of the element passes through the solder wave.

18. The apparatus for soldering an element according to Claim 17 including at least one fluid barrier curtain positioned on eack side of the means (56) for forming the solder wave to divide up the enclosed zone (50) into isolated zones.

19. The apparatus for soldering an element according to Claim 14 15 or 16 wherein the means to solder includes reflow soldering.

20. The apparatus for soldering an element according to any preceding Claim 14 to 19 wherein the enclosed zone comprises a linear tunnel (50).

21. The apparatus for soldering an element according to Claim 17 wherein the enclosed zone (50) is an apex shaped tunnel and wherein the solder wave (56) is formed adjacent an apex (52) of the tunnel.

22. The apparatus for soldering an element according to any preceding Claim 14 to 21 wherein the conveyor means (16) are selected from the group consisting of belt conveyors, finger type conveyors and pallet type conveyors.

23. The apparatus for soldering an element according to claim 14, including:
a first enclosed zone (30) for containing a gas atmosphere;
a second enclosed zone (32) for containing a gas atmosphere;
at least one fluid barrier curtain (18,20) in the entry (12) to the first enclosed zone (30);
at least one fluid barrier curtain (36) in an aperture (34) between the first enclosed zone (30) and the second enclosed zone (32);
conveyor means (16) for conveying the element through the fluid barrier curtains (18,20,36) and the first and second zones (30,32), and
means for heating and soldering the element within the first and second zones (30,32).

24. The apparatus for soldering an element according to Claim 23 including at least one additional zone through which the conveyor means (16) conveys the element, the additional zone having at least one fluid barrier curtain at an entry and an exit.

25. The apparatus for soldering an element according to Claim 23 or 24 wherein the element is heated in the first zone (30) and soldered in the second zone (32).

26. The apparatus for soldering an element according to Claim 23, 24 or 25 wherein the first zone (30) and the second zone (32) are at different temperatures.

27. The apparatus for soldering an element according to Claim 23, 24, 25 or 26 wherein the first zone (30) and the second zone (32) have different gas atmospheres therein.

28. The apparatus for soldering an element according to any preceding Claim 23 to 27 wherein two fluid barrier curtains (18,20) are provided in line at the entry (12) to the first zone (30), two fluid barrier curtains (36) are provided in line in the aperture (34) between the first enclosed zone (30) and the second enclosed zone (32), and wherein the means (28) for adding an additive is applied directly into at least one of the curtains before at least one of the first zone (30) and the second zone (32).

## Patentansprüche

1. Verfahren zum Löten eines Elements, bestehend aus den folgenden Schritten:
Transportieren des Elements in eine abgeschlossene Zone (10) durch einen Eingang (12), der wenigstens einen Fluidsperrvorhang (18, 20) enthält;
Erwärmen und Löten des Elements in der Zone (10) und
Transportieren des gelöteten Elements von der abgeschlossenen Zone (10) durch einen Ausgang (14);
dadurch gekennzeichnet, daß ein Zusatz, ausgewählt aus der Gruppe Flußmittel, reduzierende Mittel, Ameisensäure und Adipinsäure, direkt in das Fluid in wenigstens einen Fluidsperrvorhang (18, 20) am Eingang (12) zugeführt wird.

2. Verfahren zum Löten nach Anspruch 1, einschließlich der Schritte des Transportieren des Elements in eine erste abgeschlossene Zone (30) durch den Eingang (12), der wenigstens einen Fluidsperrvorhang (18, 20) enthält;
Erwärmen des Elements in der ersten abgeschlossenen Zone (30);
Transportieren des Elements von der ersten Zone (30) durch eine Öffnung (34), enthaltend wenigstens einen Fluidsperrvorhang (36), in eine zweite abgeschlossene Zone (32);
Löten des Elements in der zweiten abgeschlossenen Zone (32), und
Transportieren des gelöteten Elements von der zweiten Zone (32) durch den Ausgsgang (14), enthaltend wenigstens einen Fluidsperrvorhang (22, 24).

3. Verfahren zum Löten nach Anspruch 2, wobei ein Zusatz direkt in das Fluid in wenigstens einen Fluidsperrvorhang (36) in der Öffnung (34) zugeführt wird.

4. Verfahren zum Löten nach Anspruch 2 oder 3, wobei die erste Zone (30) und die zweite Zone (32) verschiedene Temperaturen haben.

5. Verfahren zum Löten nach Anspruch 2, 3 oder 4, wobei die erste Zone (30) und die zweite Zone (32) unterschiedliche Gasatmosphä- ren darin haben.

6. Verfahren zum Löten nach Anspruch 2, 3, 4 oder 5, wobei zusätzliche abgeschlossene Zonen mit Öffnungen eingeschlossen sind, die darin Fluidsperrvorhänge enthalten, und wobei das Element durch alle Zonen und Fluidsperrvorhänge transportiert wird.

7. Verfahren zum Löten nach einem der vorstehenden Ansprüche, wobei zwei Fluidsperrvorhänge hintereinander in dem Eingang (12) und in dem Ausgang (14) vorgesehen sind, und wobei der Zusatz direkt in das Fluid bei dem zweiten (20) der zwei Vorhänge im Eingang zugeführt wird.

8. Verfahren zum Löten nach Anspruch 7, wobei der Zusatz ausgewählt wird aus der Gruppe, bestehend aus Gas, gemischt mit Fluid in dem zweiten (20) der zwei Vorhänge, und Nebel, gemischt mit Fluid in dem zweiten (20) der zwei Vorhänge.

9. Verfahren zum Löten nach einem der vorstehenden Ansprüche 1 bis 6 wobei zwei Fluidsperrvorhänge hintereinander in dem Eingang und in dem Ausgang vorgesehen sind und wobei der Zusatz direkt in das Fluid an dem ersten (18) der zwei Vorhänge im Eingang zugeführt wird.

10. Verfahren zum Löten nach Anspruch 9, wobei der Zusatz ausgewählt wird aus der Gruppe Flußmittel, reduzierendes Mittel, Gas, gemischt mit Fluid in dem ersten (18) der zwei Vorhänge, und Nebel, gemischt mit Fluid in dem ersten (18) der zwei Vorhänge.

11. Verfahren zum Löten nach einem der vorstehenden Ansprüche, wobei Fluid in wenigstens einem Fluidsperrvorhang (18, 20) am Eingang (12) ein vorerwärmtes Gas ist.

12. Verfahren zum Löten nach einem der vorstehenden Ansprüche, wobei das Element in einem vorbestimmten Pfad (16) in die abgeschlossene Zone (50) transportiert wird, wobei eine Lotwelle (56) über einem Lottopf (58) unter dem Pfad (16) ausgebildet wird, so daß wenigstens ein Teil des Elements, das in dem Pfad (16) transportiert wird, durch die Lotwelle (56) läuft.

13. Verfahren zum Löten nach einem der vorstehenden Ansprüche 1-11, wobei das Löten ein Aufschmelz-Löten innerhalb der geschlossenen Zone (10) ist.

14. Vorrichtung zum Löten eines Elements, bestehend aus
einer abgeschlossenen Zone (10, 50) zur Aufnahme einer Gasat- mosphäre wobei die geschlossene Zone (10, 50) einen Eingang (12) und einen Ausgang (13) hat;
wenisgstens einen Fluidsperrvorhang (18, 20) am Eingang (12);
eine Transporteinrichtung (16) zum Transportieren eines Elements durch den Fluidsperrvorhang (18, 20) am Eingang (12), die abgeschlossene Zone (10, 50) und den Ausgang (14), und
eine Einrichtung zum Erwärmen und Löten des Elements innerhalb der geschlossenen Zonen (10, 50);
dadurch gekennzeichnet, daß eine Einrichtung (28) zum Zuführen eines Zusatzes direkt in das Fluid in wenigstens einem Fluidsperrvorhang (18, 20) am Eingang (12) vorgesehen ist.

15. Vorrichtung zum Löten eines Elements gemäß Anspruch 14, wobei zwei Fluidsperrvorhänge (18, 20) hintereinander am Eingang (12) vorgesehen sind, und wobei die Einrichtung (28) zum Zuführen eines Zusatzes angewendet wird direkt in den zweiten Vorhang (20).

16. Vorrichtung zum Löten eines Elements nach Anspruch 14 oder 15, wobei zwei Fluidsperrvorhänge (18, 20) hintereinander vorgesehen sind am Eingang (12), und wobei die Einrichtung (28) zum Zuführen eines Zusatzes angewendet wird direkt in den ersten Vorhang (18).

17. Vorrichtung zum Löten eines Elements nach Anspruch 14, 15 oder 16, einschließlich einer Erwärmungseinrichtung (54) in der Zone (50), um das Element, das auf der Transporteinrichtung (16) befördert worden ist, zu erwärmen, eine Einrichtung (56) zum Bilden wenigstens einer Lotwelle in der Zone (50) nach der Heizeinrichtung (16), wobei die Transporteinrichtung das Element in einem vorbestimmten Pfad (16) durch die abgeschlossene Zone (50) tansportiert, wobei sichergestellt wird, daß wenigstens ein Teil des Elements durch die Lotwelle läuft.

18. Verfahren zum Löten eines Elements nach Anspruch 17, einschließlich wenigstens eines Fluidsperrvorhangs, der auf jeder Seite der Einrichtung (56) zum Bilden der Lotwelle positioniert ist, um die abgeschlossene Zone (50) in isolierte Abschnitte zu teilen.

19. Vorrichtung zum Löten eines Elements nach Anspruch 14, wobei die Einrichtung zum Löten Aufschmetz-Löten einschließt.

20. Verfahren zum Löten eines Elements nach Anspruch 14, wobei die abgeschlossene Zone einen linearen Tunnel (50) aufweist.

21. Vorrichtung zum Löten eines Elements nach Anspruch 17, wobei die abgeschlossene Zone (50) ein spitzförmiger Tunnel ist, und wobei die Lotwelle (56) neben einer Spitze (52) des Tunnels ausgebildet ist.

22. Vorrichtung zum Löten eines Elements nach Anspruch 14, wobei die Transporteinrichtung (16) ausgewählt wird aus der Gruppe bestehend aus Riementransporteinrichtungen, Fingertyptransporteinrichtungen und Pallettentyptransporteinrichtungen.

23. Vorrichtung zum Löten eines Elements nach Anspruch 14, einschließlicht:
eine erste abgeschlossene Zone (30) zur Aufnahme einer Gasat- mosphäre;
eine zweite abgeschlossene Zone (32) zur Aufnahme einer Gasat- mosphäre;
wenigstens einen Fluidsperrvorbang (18, 20) in dem Eingang (12) der ersten abgeschlossenen Zone (30);
wenigsten einen Fluidsperrvorhang (36) in einer Öffnung (34) zwischen die ersten abgeschlossenen Zone (30) und der zweiten abgeschlossenen Zone (32);
eine Transporteinrichtung (16) zum Transportieren des Elements durch die Fluidsperrvorhänge (18, 20, 36) und die erste und die zweite Zone (30, 32) und
eine Einrichtung zum Erwärmen und Löten des Elements innerhalb der ersten und zweiten Zone (30, 32).

24. Vorrichtung zum Löten eines Elements nach Anspruch 23, einschließlich wenigstens einer zusätzlichen Zone, durch welche die Transporteinrichtung (16) das Element transportiert, wobei die zusätzliche Zone wenigstens einen Fluidsperrvorhang an einen Eingang und einem Ausgang hat.

25. Vorrichtung zum Löten eines Elements nach Anspruch 23 oder 24, wobei das Element in der ersten Zone (30) erwärmt wird und in der zweiten Zone (32) gelötet wird.

26. Vorrichtung zum Löten eines Elements nach Anspruch 23, 24 oder 25, wobei die erste Zone (30) und die zweite Zone (32) unterschiedliche Temperaturen haben.

27. Vorrichtung zum Löten eines Elements nach Anspruch 23, 24, 25 oder 26, wobei die erste Zone (30) und die zweite Zone (32) unterschiedliche Gasatmosphären darin haben.

28. Vorrichtung zum Löten eines Elements nach einem der vorstehenden Ansprüche 23 bis 27, wobei zwei Fluidsperrvorhänge (18, 20) hintereinander am Eingang (12) der ersten Zone (30) vorgesehen sind, wobei zwei Fluidsperrvorhänge (36) hintereinander in der Öffnung (34) zwischen der ersten abgeschlossenen Zone (30) und der zweiten abgeschlossenen Zone (32) vorgesehen sind, und wobei die Einrichtung (28) zum Zuführen eines Zusatzes direkt an wenigstens einen der Vorhänge vor wenigstens einer der ersten Zone (30) und der zweiten Zone (32) vorgesehen ist.

## Revendications

1. Procédé de soudage avec apport d'un élément, comprenant les étapes suivantes :
le transport de l'élément dans une zone fermée (10) par une entrée (12) comprenant au moins un rideau (18, 20) de barrage formé par un fluide,
le chauffage et le soudage avec apport de l'élément dans la zone (10), et
le transport de l'élément soudé en dehors de la zone fermée (10) par une sortie (14),
caractérisé en ce qu'un adjuvant choisi dans le groupe comprenant un flux, des agents réducteurs, l'acide formique et l'acide adipique est ajouté directement dans le fluide dans l'un au moins des rideaux (18, 20) de barrage formés par un fluide à l'entrée (12).

2. Procédé de soudage avec apport selon la revendication 1, comprenant les étapes suivantes :
le transport de l'élément dans une première zone fermée (30) par l'intermédiaire de l'entrée (12) qui comporte au moins un rideau (18, 20) formant un barrage de fluide,
le chauffage de l'élément dans la première zone fermée (30),
le transport de l'élément de la première zone (30) par une ouverture (34) comprenant au moins un rideau (36) de barrage formé par un fluide dans une seconde zone fermée (32),
le soudage avec apport de l'élément dans la seconde zone fermée (32), et
le transport de l'élément soudé à partir de la seconde zone (32) par la sortie (14) qui contient au moins un rideau (22, 24) de barrage formé par un fluide.

3. Procédé de soudage avec apport selon la revendication 2, dans lequel un adjuvant est ajouté directement au fluide dans au moins un rideau (36) de barrage formé par un fluide dans l'ouverture (34).

4. Procédé de soudage avec apport selon la revendication 2 ou 3, dans lequel la première zone (30) et la seconde zone (32) sont à des températures différentes.

5. Procédé de soudage avec apport selon la revendication 2, 3 ou 4, dans lequel la première zone (30) et la seconde zone (32) ont des atmosphères gazeuses différentes.

6. Procédé de soudage avec apport selon la revendication 2, 3, 4 ou 5, comprenant d'autres zones fermées ayant des ouvertures contenant des rideaux de barrage formés par un fluide, et l'élément est transporté dans toutes les zones et tous les rideaux de barrage formés par un fluide.

7. Procédé de soudage avec apport selon l'une quelconque des revendications précédentes, dans lequel deux rideaux de barrage formés par un fluide sont disposés sous forme alignée à l'entrée (12) et à la sortie (14), et l'adjuvant est directement ajouté au fluide dans le second (20) des deux rideaux de l'entrée.

8. Procédé de soudage avec apport selon la revendication 7, dans lequel l'adjuvant est choisi dans le groupe qui comprend un gaz mélangé au fluide dans le second (20) des deux rideaux, et un brouillard mélangé au fluide dans le second (20) des deux rideaux.

9. Procédé de soudage avec apport selon l'une quelconque des revendications précédentes 1 à 6, dans lequel les deux rideaux de barrage formés par un fluide sont alignés à l'entrée et à la sortie, et l'adjuvant est ajouté directement au fluide dans le premier (18) des deux rideaux placés à l'entrée.

10. Procédé de soudage avec apport selon la revendication 9, dans lequel l'adjuvant est choisi dans le groupe qui comprend un flux, un agent réducteur, un gaz mélangé au fluide dans le premier (18) des deux rideaux et un brouillard mélangé au fluide dans le premier (18) des deux rideaux.

11. Procédé de soudage avec apport selon l'une quelconque des revendications précédentes, dans lequel le fluide d'au moins un rideau (18, 20) de barrage formé par un fluide placé à l'entrée (12) est un gaz préchauffé.

12. Procédé de soudage avec apport selon l'une quelconque des revendications précédentes, dans lequel l'élément est transporté suivant un trajet prédéterminé (16) dans la zone fermée (50), une vague (56) de soudure est formée au-dessus d'une cuve à soudure (58) qui est placée sous ledit trajet (16) afin qu'une partie au moins de l'élément transporté dans ce trajet (16) passe dans la vague (56) de soudure.

13. Procédé de soudage avec apport selon l'une quelconque des revendications précédentes 1 à 11, dans lequel le soudage avec apport est un soudage avec refusion dans la zone fermée (10).

14. Appareil de soudage avec apport d'un élément, comprenant :
une zone fermée (10, 50) destinée à contenir une atmosphère gazeuse, cette zone fermée (10, 50) ayant une entrée (12) et une sortie (14),
au moins un rideau (18, 20) de barrage formé par un fluide et placé à l'entrée (12),
un dispositif (16) de transport d'un élément dans le rideau (18, 20) de barrage formé par un fluide à l'entrée (12), dans la zone fermée (10, 50) et à la sortie (14), et
un dispositif de chauffage et de soudage avec apport de l'élément dans la zone fermée (10, 50),
caractérisé par un dispositif (28) destiné à ajouter un adjuvant directement dans le fluide dans au moins un rideau (18, 20) de barrage formé par un fluide placé à l'entrée (12).

15. Appareil de soudage avec apport d'un élément selon la revendication 14, dans lequel deux rideaux (18, 20) de barrage formés par un fluide qui sont alignés sont placés à l'entrée (12), et le dispositif (28) d'addition d'un adjuvant est utilisé directement dans le second rideau (20).

16. Appareil de soudage avec apport d'un élément selon la revendication 14 ou 15, dans lequel deux rideaux (18, 20) de barrage formés par un fluide qui sont alignés sont placés à l'entrée (12), et le dispositif (28) destiné à ajouter un adjuvant est utilisé directement dans le premier rideau (18).

17. Appareil de soudage avec apport d'un élément selon la revendication 14, 15 ou 16, comprenant au moins un dispositif de chauffage (54) placé dans ladite zone (50) et destiné à chauffer l'élément transporté sur le dispositif de transport (16), un dispositif (56) destiné à former au moins une vague de soudure dans ladite zone (50) après le dispositif de chauffage (16), le dispositif de transport assurant le transport de l'élément suivant un trajet prédéterminé (16) passant dans la zone fermée (50), de manière qu'une partie au moins de l'élément passe réellement dans la vague de soudure.

18. Appareil de soudage avec apport d'un élément selon la revendication 17, comprenant au moins un rideau de barrage formé par un fluide placé de chaque côté du dispositif (56) destiné à former la vague de soudure afin que la zone fermée (50) soit divisée en parties isolées.

19. Appareil de soudage avec apport d'un élément selon la revendication 14, dans lequel le dispositif de soudage assure un soudage avec refusion.

20. Appareil de soudage avec apport d'un élément selon la revendication 14, dans lequel la zone fermée est un tunnel rectiligne (50).

21. Appareil de soudage avec apport d'un élément selon la revendication 17, dans lequel la zone fermée (50) est un tunnel formant une cime, et dans lequel la vague de soudure (56) est formée près de la cime (52) du tunnel.

22. Appareil de soudage avec apport d'un élément selon la revendication 14, dans lequel le dispositif de transport (16) est choisi dans le groupe qui comprend les transporteurs à courroie, les transporteurs du type à doigts et les transporteurs du type à palette.

23. Appareil de soudage avec apport d'un élément selon la revendication 14, comprenant :
une première zone fermée (30) destinée à contenir une atmosphère gazeuse,
une seconde zone fermée (32) destinée à contenir une atmosphère gazeuse,
au moins un rideau (18, 20) de barrage formé par un fluide, disposé à l'entrée (12) de la première zone fermée (30),
au moins un rideau (36) de barrage formé par un fluide placé dans une ouverture (34) disposée entre la première zone fermée (30) et la seconde zone fermée (32),
un dispositif transporteur (16) destiné à transporter l'élément dans les rideaux (18, 20, 36) de barrage formés par un fluide et la première et la seconde zone (30, 32), et
un dispositif de chauffage et de soudage avec apport de l'élément placé dans la première et la seconde zone (30, 32).

24. Appareil de soudage avec apport d'un élément selon la revendication 23, comprenant au moins une zone supplémentaire dans laquelle le dispositif transporteur (16) assure le transport de l'élément, la zone supplémentaire ayant au moins un rideau de barrage formé par un fluide à une entrée et une sortie.

25. Appareil de soudage avec apport d'un élément selon la revendication 23 ou 24, dans lequel l'élément est chauffé dans la première zone (30) et est soudé avec apport dans la seconde zone (32).

26. Appareil de soudage avec apport d'un élément selon la revendication 23, 24 ou 25, dans lequel la première zone (30) et la seconde zone (32) sont à des températures différentes.

27. Appareil de soudage avec apport d'un élément selon la revendication 23, 24, 25 ou 26, dans lequel la première zone (30) et la seconde zone (32) ont des atmosphères gazeuses différentes.

28. Appareil de soudage avec apport d'un élément selon l'une quelconque des revendications précédentes 23 à 27, dans lequel deux rideaux (18, 20) de barrage formés par un fluide sont placés sous forme alignée à l'entrée (12) de la première zone (30), deux rideaux (36) de barrage formés par un fluide sont disposés sous forme alignée dans l'ouverture (34) placée entre la première zone fermée (30) et la seconde zone fermée (32), et dans lequel le dispositif (28) destiné à ajouter un adjuvant est utilisé directement dans l'un au moins des rideaux avant l'une au moins des première zone (30) et seconde zone (32).
